# EUROPÄISCHE PATENTSCHRIFT

(11) **EP 3 442 353 B1**
(45) Veröffentlichungstag und Bekanntmachung des Hinweises auf die Patenterteilung: **11.08.2021**
(21) Anmeldenummer: 17727471.9
(22) Anmeldetag: 16.04.2017
(51) Int. Cl.: A23L 3/10, A23L 13/60, A23L 2/66, A23L 23/00

(54) **PROTEIN-GETRÄNK SOWIE VERFAHREN ZU DESSEN HERSTELLUNG**
PROTEIN DRINK AND METHOD FOR PRODUCING SAME
BOISSON PROTÉINÉE ET PROCÉDÉ POUR LA PRÉPARER

(30) Priorität: 16.04.2016 DE 102016107075
(43) Veröffentlichungstag der Anmeldung: 20.02.2019
(73) Patentinhaber: Klassen, Peter, 54441 Temmels (DE)
(72) Erfinder: KLASSEN, Philipp, 54441 Temmels (DE); KIMMEL, Stefan, 54451 Irsch (DE); KLASSEN, Peter, 54451 Temmels (DE)
(74) Vertreter: Westphal, Mussgnug & Partner Patentanwälte mbB
(86) Internationale Anmeldenummer: PCT/DE2017/000103
(87) Internationale Veröffentlichungsnummer: WO 2017/177998

(56) Entgegenhaltungen:
- DATABASE GNPD [Online] MINTEL; November 2013 (2013-11), N.N.: "Beef broth", XP002772398, Database accession no. 2229154
- DATABASE GNPD [Online] MINTEL; November 2015 (2015-11), N.N.: "Beef broth", XP002772399, Database accession no. 3495895
- DATABASE GNPD [Online] MINTEL; Januar 2016 (2016-01), N.N.: "Low sodium beef broth", XP002772400, Database accession no. 3733499
- N.N.: "Suppe mit Fleisch pürieren?", , 27. März 2012 (2012-03-27), XP002772401, Gefunden im Internet: URL:https://web.archive.org/web/2012032719 5745/http://www.chefkoch.de:80/forum/2,58, 418298/Suppe-mit-Fleisch-puerieren.html [gefunden am 2017-07-21]

## Beschreibung

Die vorliegende Erfindung betrifft ein Protein-Getränk nach dem Oberbegriff des Anspruchs 1, insbesondere auf Basis von Fleischbrühe, sowie ein Verfahren zu seiner Herstellung mit Merkmalen des Anspruchs 8, wie teilweise aus GB 1 490 144 A oder WO 20131 004 778 A1 bekannt. Rinderbrühen sind zudem aus "Beef broth", GNPD, MINTEL, (201311), Database accession no. 2229154, "Beef broth", GNPD, MINTEL, Database accession no. 3495895 und "Low sodium beef broth", GNPD, MINTEL, Database accession no. 3733499 bekannt. Weiterhin ist eine Fleischsuppe unter folgender URL beschrieben:
https://web.archive.org/web/20120327195745/http://www.chefkoch .de:80/forum/2,58,418298/Suppe-mit-Fleisch-puerieren.html.

### HINTERGRUND DER ERFINDUNG

Proteine, die umgangssprachlich auch als Eiweiße bezeichnet werden, sind aus Aminosäuren aufgebaute biologische Makromoleküle, die sich in allen Zellen des menschlichen Körpers wiederfinden. So bestehen Muskeln, Gehirn, Haut und Haare des Menschen überwiegend aus Proteinen. Dabei haben die Proteine im menschlichen Organismus die unterschiedlichsten Funktionen, wie z.B. als Antikörper zur Abwehr von Infektionen, als Kollagene zum Aufbau der Haut, des Bindegewebes und der Knochen, als Enzyme beim Stoffumsatz oder auch als Reservestoff zur Lieferung von Energie. Proteinmangel führt zu Haarausfall, Muskelschwäche, Wachstumsstörungen oder Fettleber. Wichtige Nahrungsmittel als Proteinquellen für den Menschen sind Eier, Fisch, Fleisch, Hülsenfrüchte, Milchprodukte und Nüsse.

Der Vorteil von Fleisch als Basis für die täglich benötigten Proteine besteht darin, dass im Fleisch neben den Proteinen noch Fett, Vitamine und Mineralien enthalten sind, die dem Körper zusätzlich als Energiequelle und zur Stärkung des Immunsystems dienen können. So enthalten beispielsweise 100 g Rindfleisch ca. 20 g bis ca. 30 g Proteine und ca. 2 g bis ca. 15 g Fett, wobei es sich bei den restlichen Anteilen im Wesentlichen um Wasser handelt. Daneben sind jedoch noch geringe, aber wirksame Mengen an Mineralien vorhanden, wobei vor allem Natrium, Kalium, Magnesium, Calcium, Eisen und Phosphor zu nennen sind. Als Vitamine sind im Fleisch darüber hinaus insbesondere Vitamin A1 (Retinol), Vitamin B1 (Thiamin), Vitamin B2 (Riboflavin), Vitamin B6 (Pyridoxin), Vitamin C (Ascorbinsäure) und Vitamin B3 (Niacin) enthalten.

So bietet eine gut gewürzte Rindfleischbrühe neben einem hervorragenden Geschmack auch zahlreiche Vorteile für die Gesundheit des Konsumenten. In der neueren Zeit hat sich daher beispielsweise Rinderknochenbrühe zu einer neuen Trendnahrung entwickelt, die im Pappbecher mit Plastikdeckel zum Mitnehmen und unterwegs Trinken angeboten wird, wobei die Brühe Kraft und Energie geben, das Immunsystem stärken und wichtige Bausteine für das Bindegewebe und die Gelenke liefern soll. Neben den Rinderbrühen erfreuen sich insbesondere Hühnerbrühen bei den Konsumenten besonderer Beliebtheit.

### STAND DER TECHNIK

Proteinhaltige Getränke werden beispielsweise in der WO 2007/118610 A1 beschrieben. Gegenstand dieser Patentanmeldung ist ein kohlehydrathaltiges funktionales Getränk, das mindestens ein in einem flüssigen Medium gelöstes Proteinhydrolysat und mindestens ein Saccharoseisomer ausgewählt aus der Gruppe Leukrose und Isomaltulose umfasst. In der DE 600 24 438 T2 wird ein Sportlergetränk beschrieben, das Mikronährstoffe in Kombination mit konventionellen Zusatzstoffen umfasst, wobei die Mikronährstoffe ausgewählt sind aus der Gruppe, die aus Ascorbinsäure, Vitamin E, β-Karotin, Pyridoxin, Riboflavin, Thiamin, Niacin, Cobalamin, Folsäure, Q10, Kupfer, Magnesium, Mangan, Selen, Zink und Chrom besteht. Die Mikronährstoffe sollen in Kombination mit lebensfähigen Lactobazillen eine positive Wirkung auf die menschliche Darmschleimhaut haben.

DE 101 05 689 A1 beschreibt ein Instantpulver, das zum Ausgleich fleischarmer und fleischloser Ernährung zur Herstellung eines proteinhaltigen Instantgetränks eingesetzt wird, wobei das Instantpulver besonders bevorzugt Sojaproteine in einer Menge im Bereich von 80 bis 92 Gew.%, bezogen auf das Gewicht des Instantpulvers, enthält.

Daneben werden Druckschriften GB 1 490 144 A und WO 2013/ 004 778 A1 genannt.

Ein Nachteil der Protein-Getränke nach dem Stand der Technik besteht insbesondere darin, dass sie meist einen künstlichen Geschmack aufweisen, so dass ihre Aufnahme für den Konsumenten nur mit einem geringen Genuss verbunden ist. Hinzu kommt, dass die Protein-Getränke nach dem Stand der Technik überwiegend aus künstlichen Bestandteilen aufgebaut sind und ihnen damit häufig für den Körper wichtige Spurenelemente fehlen, die in natürlichen Proteinquellen wie Fleisch, Knochen und Knochenmark vorhanden sind.

### AUFGABENSTELLUNG UND BESCHREIBUNG DER ERFINDUNG

Die Aufgabe der vorliegenden Erfindung besteht nun darin, ein über einen längeren Zeitraum haltbares Protein-Getränk anzubieten, das den hervorragenden Geschmack einer echten Brühe aufweist und dabei als Nahrungsmittelergänzung, als Power-Drink für zwischendurch oder auch als Sportlergetränk geeignet ist, um dem Körper verbrauchte Energie zurückzugeben.

Gelöst wird die Aufgabe mit einem Verfahren zur Herstellung des Protein-Getränks nach Anspruch 1 sowie mit einem Protein-Getränk nach Anspruch 5, welches mit einem derartigen Verfahren hergestellt ist. Vorteilhafte Ausführungsformen sind Gegenstand jeweiliger
Unteransprüche.

Das Verfahren zur Herstellung eines erfindungsgemäßen Protein-Getränks umfasst die aufeinander folgenden und sich ggf. in der Abfolge überschneidenden Schritte:
- Zerkleinern von gekühltem oder angetautem Fleisch mittels eines Fleischwolfs,
- Herstellung einer Fleischbrühe aus dem zerkleinerten Fleisch, ggf. nach Zugabe von Flüssigkeit, jedenfalls ohne Entfernung von Feinstoffen,
- Aufkochen der Fleischbrühe,
- Feinpürieren der das zugegebene zerkleinerte Fleisch vollständig enthaltenden Brühe, mittels eines Industriemixers,
- Abfüllen des das zugegebene zerkleinerte Fleisch vollständig enthaltenden Protein-Getränks in Flaschen oder Dosen und
- Sterilisieren des Protein-Getränks, wobei
- das Protein-Getränk jeweils bezogen auf das Gesamtgewicht des Getränks, 3 bis 20 Gew.% Proteine, 0.5 bis 5 Gew.% Fett, 70 bis 95 Gew.% Wasser und 0.5 bis 15 Gew.% Kohlehydrate, davon 0.5 bis 10 Gew.% Zucker umfasst und das Proteingetränk zu 80 - 100 Gew.% aus Fleischbrühe besteht und zugegebenes zerkleinertes Fleisch vollständig im Protein-Getränk enthalten bleibt.

Es gelingt auf diese Weise Fleischgetränke herzustellen, die bis zu einem Drittel des Gesamtgetränkgewichts Fleisch vollständig enthalten, wobei nach dem erfindungsgemäßen Verfahren eine ausreichende Verflüssigung erreicht ist, dass das Fleischgetränk trinkbar, bei besonderer Verfahrensweise sogar magensondengängig ist. Besonders bevorzugt wird ein Industriemixer zur Getränkeherstellung benutzt, nachdem das vorzerkleinerte Fleisch in seiner Brühe mürbegekocht ist.

Das Sterilisieren des Protein-Getränks wird bei über 115°C, vorzugsweise bei 121°C durchgeführt.

Nach einer vorteilhaften Ausführungsform des Herstellungsverfahrens findet ein Versetzen der Brühe unter Kochen mit einem Grundpulver, das Kohlehydrate, Proteine und Ascorbinsäure umfasst, statt. Besonders bevorzugt erfolgt eine Zugabe von Honig, Kakaopulver und/oder Aromastoff.

Vorzugsweise wird als Fleischbrühe Rindfleischbrühe eingesetzt. Es sind jedoch auch andere Fleischbrühen, insbesondere Hühnerfleischbrühen, für die Herstellung des erfindungsgemäßen Protein-Getränks gut geeignet.

Das erfindungsgemäße Protein-Getränk umfasst 3 bis 20 Gew.% Proteine, 0.5 bis 5 Gew.% Fett, 70 bis 95 Gew.% Wasser und 0.5 bis 15 Gew.% Kohlehydrate, davon 0.5 bis 10 Gew.% Zucker. Dabei beziehen sich die jeweiligen Gewichtsanteile auf das Gesamtgewicht des Protein-Getränks. Der Idee einer neuartigen Herstellung eines Fleischgetränks folgend ist zugegebenes Fleisch mit all seinen Bestandteilen vollständig im fertigen Getränk enthalten.

Daneben enthält das erfindungsgemäße Protein-Getränk vorteilhaft zusätzlich Vitamine und Mineralstoffe, wobei die Vitamine ausgewählt sind aus der Gruppe bestehend aus Vitamin A1 (Retinol), Vitamin B1 (Thiamin), Vitamin B2(Riboflavin), Vitamin B6 (Pyridoxin), Vitamin C (Ascorbinsäure) und Vitamin B3 (Niacin) und die Mineralstoffe insbesondere ausgewählt sind aus der Gruppe bestehend aus Natrium, Kalium, Magnesium, Calcium, Eisen und Phosphor umfassen.

Als Proteinquelle dient in erster Linie Fleischbrühe, wobei das Protein-Getränk zu 80 bis 100 Gew.% auf Fleischbrühe basiert. Zusätzliche Proteine zum Anreichern des Protein-Getränks werden vorteilhaft in Form von Soja-Protein-Isolat zugegeben, wobei die Zugabe vorzugsweise in Pulverform erfolgt.

In einer bevorzugten Ausführungsform der vorliegenden Erfindung werden dem Protein-Getränk außerdem Kohlehydrate in Form von Maltodextrin, Inulin, Magermilchpulver und Guarkernmehl ebenfalls jeweils als Pulver zugegeben.

Zur Geschmacksverbesserung enthält das erfindungsgemäße Protein-Getränk vorzugsweise Honig, Kakaopulver und vorteilhaft mindestens einen Aromastoff. Dabei dient der Honig als Energiequelle und zum Süßen des Protein-Getränks. Das Kakaopulver liefert neben dem Aroma Fett und Eiweiße. Ein bevorzugter Aromastoff ist Mandelaroma, wobei bereits wenige Tropfen Mandelaroma ausreichen, um dem Protein-Getränk den gewünschten Geschmack zu geben.

Im Folgenden wird ein Ausführungsbeispiel zur Herstellung des Protein-Getränks am Beispiel einer Rindfleischbrühe näher erläutert.

Zur Herstellung der Rindfleischbrühe werden zwischen 2 kg und 5 kg Rindfleisch, insbesondere Bullenhals, im Fleischwolf zerkleinert und zusammen mit Rinderknochen, insbesondere Markknochen, und Suppenkräutern und/oder Suppengemüse, wie z.B. Lorbeerblättern, Rosmarin, Salbei, Thymian, Liebstöckel, Petersilie, Lauch, Sellerie, Knoblauch, Zwiebeln und Wachholderbeeren, in ca. 10 Liter Wasser ca. 1 Stunde gekocht und weitere 3 Stunden bei Siedetemperatur geköchelt, um ein optimales Auslaugen der Inhaltsstoffe zu erreichen und eine Entmischung des Fettes zu verhindern. Gewürzt wird das Ganze mit Salz und Pfeffer oder auch weiteren Gewürzen, wie beispielsweise Koriander und Muskat. Dabei kann das Würzen mit Salz vorzugsweise auch nach dem Kochen erfolgen, wodurch die osmotischen Vorgänge zur Herauslösung der Mineralien aus den Knochen begünstigt werden. Neben oder anstatt frischer Suppenkräuter können natürlich auch getrocknete Suppenkräuter eingesetzt werden.

Anschließend kann nach einer vorteilhaften Verfahrensvariante die Brühe grob passiert werden, die zurückgebliebenen Festanteile ausgepresst, separat feinstpüriert und erneut zugegeben, die Brühe dann degraissiert und anschließend fein passiert, um unerwünschte Fest- und Trübstoffe zu entfernen, dann erneut feinstpüriert und wieder zugegeben. Alternativ wurde wie folgt verfahren, um ein gutes Getränk zu erhalten: Nach dem Kochvorgang wird die Brühe degraissiert, um unerwünschte Fest- und Trübstoffe zu entfernen. Nun kann die Brühe mit allen Festanteilen so zerkleinert werden, dass eine trinkfähige Flüssigkeit vorhanden ist.

5 Liter der nach solcher Art erhaltenen Brühe werden in einem frischen Topf aufgekocht und unter Kochen mit einem mit ca. 100 g bis ca. 350 g eines Grundpulvers versetzt, das neben Kohlehydraten (Polysacchariden), Proteinen und Ascorbinsäure auch Lecithin umfasst. Die Mischung wird so lange gekocht, bis sich eine stabile Emulsion gebildet hat. Die Emulsion wird anschließend unter Rühren mit flüssigem Honig, Kakaopulver und Mandelaroma versetzt. Das fertige Protein-Getränk kann nun in Flaschen abgefüllt und bevorzugt bei 121°C sterilisiert werden.

Dabei sind in der Analyse durchschnittliche Nährwerte je 100 g festgestellt worden: Brennwert 262kJ/62kcal, Fett 3,6 g, davon gesättigte Fettsäuren 1,4 g, Kohlenhydrate 4,0 g, davon Zucker 4,0 g, Eiweiß 3,5 g und Salz 0,2 g.

Bei einer bevorzugten Ausgestaltung der vorliegenden Erfindung besteht das Grundpulver aus Maltodextrin, Inulin, SojaLecithin, Soja-Protein-Isolat, Magermilchpulver, Guarkernmehl und Ascorbinsäure. Die Mengen der einzelnen Bestandteile können dabei in einem relativ weiten Rahmen variiert werden und hängen im Wesentlichen davon ab, wieviel von welchen Proteinen oder Kohlehydraten das fertige Protein-Getränk enthalten soll. Es wurde gefunden, dass ein vorteilhaftes Grundpulver einen Anteil von 30 - 55 Gew.% Proteinen, 20 bis 40 Gew.% Kohlehydraten, 5 bis 20 Gew.% Polysaccharide, 5 bis 20 Gew.% Milchzucker, 5 bis 20 Gew.% Lecithin und 0.5 bis 5 Gew.% Ascorbinsäure aufweist.

Die Mengen an eingesetztem flüssigen Honig und Kakaopulver können ebenfalls variieren und hängen davon ab, wie der Geschmack des Protein-Getränks ausfallen soll. Vorteilhaft werden auf 5 Liter Brühe ca. 50 bis 300 g flüssiger Honig und 10 bis 60 g reines Kakaopulver eingesetzt. Ein bevorzugter Aromastoff, der den Geschmack des Protein-Getränks abrunden soll, ist geröstetes Mandelaroma, das in wenigen Millilitern eingesetzt wird, wobei natürlich auch hier wieder die eingesetzte Menge vom angestrebten Geschmack abhängt.

Das oben aufgeführte Beispiel ist nicht als Einschränkung zu sehen. Vielmehr kann festgehalten werden, dass sich auch andere Fleischsorten, insbesondere Fleisch von Geflügel, aber auch Kalbsfleisch und andere Sorten, zur Herstellung der Ausgangsbrühe für das Protein-Getränk eignen. Bei der Herstellung der Ausgangsbrühe bieten sich darüber hinaus zahlreiche Möglichkeiten, den Geschmack der Brühe durch die Zugabe unterschiedlicher Gewürze, Suppenkräuter und Suppengemüse zu beeinflussen. So kann beispielsweise auch Suppengemüse zusammen mit Knochen vor der Zugabe zur Brühe angeröstet werden, um den Geschmack zu intensivieren.

Des Weiteren können die Anteile an Kohlehydrate und Proteine durch die Menge und Variation des zugegebenen Grundpulvers variiert und dem jeweiligen Bestimmungszweck angepasst werden. Nicht zuletzt können natürlich auch die aromaverleihenden Stoffe, wie Kakaopulver, Honig und die reinen Aromastoffe, ebenfalls mengenmäßig variiert oder durch andere Stoffe ersetzt werden, womit dann der Geschmack des Protein-Getränk den Wünschen des Konsumenten entsprechend verändert werden kann.

## Patentansprüche

1. Verfahren zur Herstellung eines Protein-Getränks, wobei das Verfahren die aufeinander folgenden und sich ggf. in der Abfolge überschneidenden Verfahrensschritte umfasst:
- Zerkleinern von gekühltem oder angetautem Fleisch mittels eines Fleischwolfs oder eines sonstigen Püriergeräts,
- Herstellung einer Fleischbrühe aus dem zerkleinerten Fleisch, ggf. nach Zugabe von Flüssigkeit, jedenfalls ohne Entfernung von Feinstoffen,
- Aufkochen der Fleischbrühe,
- Feinpürieren der das zugegebene zerkleinerte Fleisch vollständig enthaltenden Brühe, mittels eines Industriemixers,
- Abfüllen des das zugegebene zerkleinerte Fleisch vollständig enthaltenen Protein-Getränks in Flaschen oder Dosen und
- Sterilisieren des Protein-Getränks, wobei
- das Protein-Getränk jeweils bezogen auf das Gesamtgewicht des Getränks, 3 bis 20 Gew.% Proteine, 0.5 bis 5 Gew.% Fett, 70 bis 95 Gew.% Wasser und 0.5 bis 15 Gew.% Kohlehydrate, davon 0.5 bis 10 Gew.% Zucker umfasst und das Proteingetränk zu 80 - 100 Gew.% aus Fleischbrühe besteht und zugegebenes zerkleinertes Fleisch vollständig im Protein-Getränk enthalten bleibt.

2. Verfahren nach Anspruch 1,
**dadurch gekennzeichnet, dass** auf das Aufkochen der Fleischbrühe folgt: ein Versetzen der Brühe unter Kochen mit einem Grundpulver, das Kohlehydrate, Proteine, Lecithin und Ascorbinsäure umfasst, Zugabe von Honig, Kakaopulver und Aromastoff.

3. Verfahren nach einem der Ansprüche 1 oder 2,
**dadurch gekennzeichnet, dass**
zur Herstellung der Fleischbrühe Rindfleisch, insbesondere Bullenhals, eingesetzt wird, wobei das Rindfleisch zunächst im Fleischwolf zerkleinert, mit Salz und Pfeffer gewürzt und zusammen mit Suppenkräutern in Wasser aufgekocht und für ca. 3 Stunden bei Siedetemperatur gehalten wird, um ein optimales Auslaugen der Inhaltsstoffe erreichen und eine Entmischung des Fettes zu verhindern, woraufhin das Feinpürieren erfolgt.

4. Verfahren nach einem der vorherigen Ansprüche,
**dadurch gekennzeichnet, dass** die Fleischbrühe mit dem feinzerkleinerten Fleisch gekocht wird, bis das Fleisch mürbe geworden ist, und dass dann ein Pürieren stattfindet, bis eine Magensondengängigkeit erreicht ist.

5. Protein-Getränk, hergestellt mit einem Verfahren nach einem der Anspruche 1 bis 4.

6. Protein-Getränk nach Anspruch 5,
**dadurch gekennzeichnet, dass**
das Protein-Getränk Vitamine und Mineralstoffe umfasst, wobei die Vitamine ausgewählt sind aus der Gruppe bestehend aus Vitamin A (Retinol), Vitamin B1 (Thiamin), Vitamin B2 (Riboflavin), Vitamin B6 (Pyridoxin), Vitamin C (Ascorbinsäure) und Vitamin B3 (Niacin) und wobei die Mineralstoffe ausgewählt sind aus der Gruppe bestehend aus Natrium, Kalium, Magnesium, Calcium, Eisen und Phosphor.

7. Protein-Getränk nach einem der Ansprüche 5 oder 6,
**dadurch gekennzeichnet, dass**
das Protein-Getränk zusätzlich Lecithin und mindestens einen Aromastoff umfasst.

8. Protein-Getränk nach einem der Ansprüche 5 bis 7, **dadurch gekennzeichnet, dass**
das Protein-Getränk als Kohlehydratquellen Maltodextrin, Inulin, Magermilchpulver und Guarkernmehl umfasst.

9. Protein-Getränk nach einem der Ansprüche 5 bis 8, **dadurch gekennzeichnet, dass**
das Protein-Getränk als Proteinquellen Fleischbrühe und Soja-Protein-Isolat umfasst.

10. Protein-Getränk nach einem der Ansprüche 5 bis 9, **dadurch gekennzeichnet, dass**
das Protein-Getränk als Zuckerquelle Honig umfasst.

11. Protein-Getränk nach einem der Ansprüche 5 bis 10, **dadurch gekennzeichnet, dass**
das Protein-Getränk Kakaopulver und Mandelaroma als Aromastoffe umfasst.

## Claims

1. Procedure for production of a protein drink, wherein the procedure comprises the sequential procedural steps, which may overlap in their sequence:
- chopping of cooled or partly thawed meat with a mincer or another pureeing device,
- production of a meat stock of the chopped meat, if applicable following the addition of liquid, in any case without removal of fine substances,
- boiling of the meat stock,
- fine pureeing of the stock fully containing the added chopped meat with an industrial blender,
- filling the protein drink fully containing the added chopped meat into bottles or cans, and
- sterilising the protein drink, wherein
- the protein drink, each referring to the total weight of the drink, contains 3 to 20 wt% of proteins, 0.5 to 5 wt% of fat, 70 to 95 wt% of water and 0.5 to 15 wt% of carbohydrates, of which 0.5 to 10 wt% are sugar, and the protein drink comprises 80 - 100 wt% of meat stock and added chopped meat remains fully preserved in the protein drink.

2. Procedure according to claim 1,
**characterised in that** boiling of the meat stock is followed by: mixing a basic powder that contains carbohydrates, proteins, lecithin, and ascorbic acid into the stock while boiling, adding of honey, cocoa powder, and aroma.

3. Procedure according to one of claims 1 or 2, **characterised in that**
production of the meat stock uses beef, in particular neck of bull, in which the beef is initially chopped in the mincer, seasoned with salt and pepper, and boiled in water with pot herbs, and kept at boiling temperature for approx. 3 hours in order to achieve optimal leaching of the contents and to prevent separation of the fat, which is followed by fine pureeing.

4. Procedure according to one of the preceding claims, **characterised in that** the meat stock with the finely chopped meat is boiled until the meat has turned tender, and that pureeing is performed then until the result can be fed through a gastric tube.

5. Protein drink, produced in a procedure according to one of the claims 1 to 4.

6. Protein drink according to claim 5,
**characterised in that**
the protein drink comprises vitamins and minerals, in which the vitamins are chosen from the group comprising vitamin A (retinol), vitamin B1 (thiamine), vitamin B2 (riboflavin), vitamin B6 (pyridoxin), vitamin C (ascorbic acid), and vitamin B3 (niacin) and in which the minerals are chosen from the group comprising sodium, potassium, magnesium, calcium, iron, and phosphorus.

7. Protein drink according to one of claims 5 or 6, **characterised in that**
the protein drink additionally comprises lecithin and at least one aroma.

8. Protein drink according to one of claims 5 to 7, **characterised in that**
the protein drink comprises maltodextrin, inulin, skimmed milk powder, and guar gum as carbohydrate sources.

9. Protein drink according to one of claims 5 to 8, **characterised in that**
the protein drink comprises meat stock and soy protein isolate as protein sources.

10. Protein drink according to one of claims 5 to 9, **characterised in that**
the protein drink comprises honey as sugar source.

11. Protein drink according to one of claims 5 to 10, **characterised in that**
the protein drink comprises cocoa powder and almond aroma as aromas.

## Revendications

1. Procédé de fabrication d'une boisson protéinée, ce procédé comprenant les étapes de procédé qui se succèdent et qui se chevauchent éventuellement par la suite :
- broyage de viande réfrigérée ou dégelée à l'aide d'un hachoir à viande ou d'un autre mixeur,
- fabrication d'un bouillon de viande hachée, éventuellement après adjonction de liquide, en tout cas sans retrait de substances fines,
- mise à ébullition du bouillon,
- mixage du bouillon contenant la totalité de la viande hachée ajoutée en utilisant un mixeur industriel,
- remplissage de la boisson protéinée qui contient la totalité de la viande hachée ajoutée dans des bouteilles ou des canettes, et
- stérilisation de la boisson protéinée, de sorte que
- la boisson protéinée contient dans chaque cas - par rapport au poids total de la boisson - de 3 à 20 % en poids de protéines, 0,5 à 5 % en poids de matières grasses, 70 à 95 % en poids d'eau et 0,5 à 15 % en poids de glucides, y compris 0,5 à 10% en poids de sucre, et la boisson protéinée est constituée à 80 à 100 % en poids de bouillon de viande, et la viande hachée qui y est ajoutée reste entièrement intacte dans la boisson.

2. Procédé selon la revendication 1,
**caractérisé en ce que** les étapes suivantes succèdent à l'ébullition du bouillon de viande : mélange du bouillon pendant la cuisson avec une poudre de base qui contient des glucides, des protéines, de la lécithine et de l'acide ascorbique, adjonction de miel, de poudre de cacao et d'un agent aromatisant.

3. Boisson protéinée selon l'une des revendications 1 à 2, **caractérisée en ce qu'**on
utilise pour la fabrication du bouillon de viande de la viande de boeuf, en particulier du cou de taureau, la viande de bœuf étant tout d'abord broyée dans un hachoir à viande, aromatisé avec du sel et du poivre, puis on la fait bouillir dans l'eau avec des condiments pour soupes et on la maintient à ébullition pendant environ 3 heures pour effectuer une lixiviation optimale des ingrédients et pour empêcher une ségrégation de la graisse, après quoi on effectue le mixage fin.

4. Procédé selon l'une quelconque des revendications précédentes.
**Caractérisée en ce que** le bouillon de viande est cuit avec la viande finement hachée jusqu'à ce que la viande soit devenue bien tendre, et qu'elle soit transformée en purée, jusqu'à ce qu'elle devienne apte à être utilisée dans une sonde gastrique.

5. Boisson protéinée fabriquée par un procédé selon l'une quelconque des revendications 1 à 4.

6. Boisson protéinée selon la revendication 5, **caractérisée en ce que**
la boisson protéinée contient des vitamines et des minéraux, sachant que ces vitamines sont choisies dans le groupe constitué par la vitamine A (rétinol), la vitamine B1 (thiamine), la vitamine B2 (riboflavine), la vitamine B6 (pyridoxine), la vitamine C (acide ascorbique) et la vitamine B3 (niacine), et dans laquelle les minéraux sont choisis dans le groupe constitué par le sodium, le potassium, le magnésium, le calcium, le fer et le phosphore.

7. Boisson protéinée selon l'une des revendications 5 à 6, **caractérisée en ce que**
la boisson protéinée comprend en outre de la lécithine et au moins un agent aromatisant.

8. Boisson protéinée selon l'une des revendications 5 à 7, **caractérisée en ce que**
la boisson protéinée contient, en tant que source de glucides, de la maltodextrine, de l'inuline, du lait écrémé en poudre et de la gomme de guar.

9. Boisson protéinée selon l'une des revendications 5 à 8, **caractérisée en ce que**
la boisson protéinée contient, en tant que source de protéines, du bouillon protéiné et de l'isolat de protéine de soja.

10. Boisson protéinée selon l'une des revendications 5 à 9, **Caractérisée en ce que**
la boisson protéinée contient, en tant que source de sucre, du miel.

11. Boisson protéinée selon l'une des revendications 5 à 10, **caractérisée en ce que**
la boisson protéinée contient de la poudre de cacao et des arômes d'amandes en tant qu'agents aromatisants.
